# EUROPEAN PATENT APPLICATION

(11) **EP 0 718 649 A1**
(43) Date of publication of application: **26.06.1996**
(21) Application number: 95119752.4
(22) Date of filing: 14.12.1995
(51) Int. Cl.: G02B 6/30

(54) **Self-aligning coupling system between optical fibres and waveguides**

(30) Priority: 23.12.1994 IT MI942620
(71) Applicant: ITALTEL SOCIETA ITALIANA TELECOMUNICAZIONI s.p.a., I-20149 Milano (IT)
(72) Inventor: Schiattone, Francesco, I-22060 Novedrate (Co) (IT)
(74) Representative: Giustini, Delio

(57) **Abstract**

Coupling system comprising preferentially:
- a support element (41) provided with at least one longitudinal groove (43) suitable to receive a longitudinal positioning body (61);
- a first substrate (1) on one side of which is deposed at least one waveguide (23) and is provided with at least one longitudinal groove (31) displaced at a predetermined distance with respect to the axis of the waveguide (23);
- at least one more substrate (51) which supports at least one optical fibre length (53) for the transmission of optical signals, and it is provided with at least one longitudinal groove, also this one put at said predetermined distance with respect to the axis of said optical fibre length (53).

The above-mentioned longitudinal positioning body (61) is preferentially set up by an optical fibre positioning length.

## Description

### Field of the Invention

The present invention relates to a coupling system between optical fibres and waveguides in which all degrees of freedom of the system turn out to be automatically aligned.

In optical type devices the problems regarding the "packaging" represents a great importance concerning the possibilities of manufacturing and reliability of said devices. In particular the plane geometry technologies has enabled the low cost realization of a multitude of optical components such as for example "optical splitters".

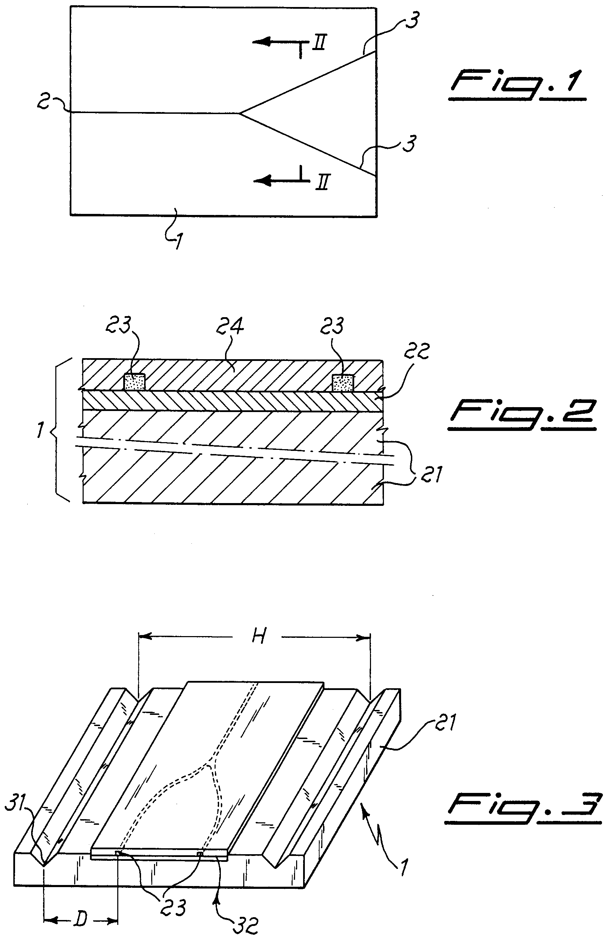

Figure 1 shows in a schematic way an optical splitter and in particular a substrate 1 is shown on which optical guides are deposited according to an already known way.

Just for indication reasons an input waveguide labelled by the number 2 is shown. Said guide branches is than splitted in two waveguides countermarked in the figure by the reference numerical 3, and as a consequence the optical signal passing through this input waveguide splits up in the two roads of the above-mentioned branches.

Figure 2 shows the cross section carried out according to plane II-II of figure 1 in order to point out the shape of the above-mentioned waveguide 2 and said substrate 1.

In particular such element is set up by a body of semiconductor material 21 (such as for example Lithium Niobate, Gallium Arsenide, Indium Phosphide, Silicon, etc.) on which the waveguides are realized. Different are the realization techniques of said guides in function of the specific semiconductor used as substrate. Among those techniques hereinafter are mentioned the deposition, growth and diffusion techniques.

Just as an example, but not limited to this, we refer hereafter to the deposition technique on Silicon. In this case on said substrate a first glass layer 22 is put which sets up the lower cladding of the waveguide.

On this glass layer 22 is put a layer of dielectric material 23 presenting a higher refraction index compared to the refraction index presented by layer 22, and then said layer 23 is subject to a photolithographic procedure through which it turns out to be possible to define the geometry of the waveguides. This photolithographic procedure makes it thus possible to "attach" the portions of the dielectric material 23 which do not set up the real waveguides, allowing in this way to obtain waveguides 23 showing a predetermined geometry.

The waveguides 23 are then covered again by a further glass layer 24 presenting a lower refraction index compared to the refraction index presented by the layer 23 setting up the upper cladding of the waveguides.

In modern telecommunications systems there is the need to couple the above-mentioned optical fibre waveguides, for example in order to connect the optical splitters to the devices connected upstream and/or downstream of such components.

### Background Art

US 4.639.074 discloses a self-aligning optical fibre guide comprising:
- a first substrate containing optical guides put longitudinally in its upper side;
- a second substrate comprising a plurality of longitudinal grooves, each one of which shaped in such way to receive a corresponding optical fibre;
- a covering element which also comprises a plurality of longitudinal grooves which overlap the first substrate as well as the second one.

Such coupler thanks to the presence of the three elements as explained here-in-above enables to realize an automatic alignment of five of the six degrees of freedom inherent to the optical fibre-guide alignment process. In other words the use of the coupler described in said patent implies the adjustment of a further degree of freedom achievable for example in an active way by transferring laterally the complex set up by said second substrate and by said covering element and than monitoring and maximizing the intensity of the optical signals passing from the fibres to the optical guides.

### Object of the Invention

The object of the present invention is the realization of a coupling system where all the degrees of freedom of the system are aligned in an automatic way.

### Disclosure of the Invention

According to the invention the above mentioned object is achieved by a self-aligning coupling system between optical fibres and waveguides, including:
- a first substrate on one side of which at least one waveguide is realized;
- at least a second substrate which supports at least one length of optical fibre for the transmission of optical signals which turns out to be constrained against said substrate by means of a covering element,
characterized in that at least one of the above-mentioned substrates includes a longitudinal groove suitable to receive a longitudinal positioning body, said longitudinal groove being put at a predetermined distance compared to the axis of said at least one waveguide, and/or with reference to said at least one optical fibre length.

### Brief Description of the Drawings

The features of the present invention which are believed to be novel are set forth with particularity in the appended claims. The invention, together with further objects and advantages thereof, may be understood with reference to the following description, taken in conjunction with the accompanying drawings and in which:
figure 1, already described shows in a schematic way a substrate of semiconductor material on which an optical splitter has been obtained;
figure 2, already described shows in cross section a portion of the substrate realized according to plane II-II of figure 1;
figure 3 shows a perspective view of a first substrate on which waveguides are deposited;
figure 4 shows a perspective view of a support element;
figure 5 shows a perspective view of a second substrate suitable to receive optical fibre lengths;
figure 6 shows a perspective view of a first substrate 1 of figure 3 coupled to a second and third substrate marked by 51 and 62, respectively;
figure 7 shows the cross section of the support element and of the second substrate realized according to plane VII-VII of figure 6;
figure 8 shows the cross section of the support element and of the first substrate realized according to plane VIII-VIII of figure 6.

### Detailed Description of the Preferred Embodiment

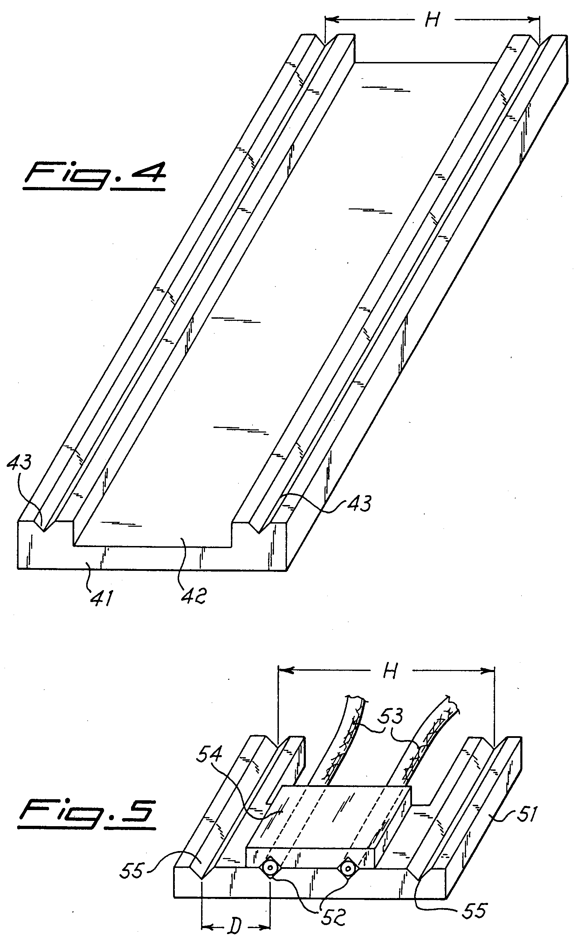

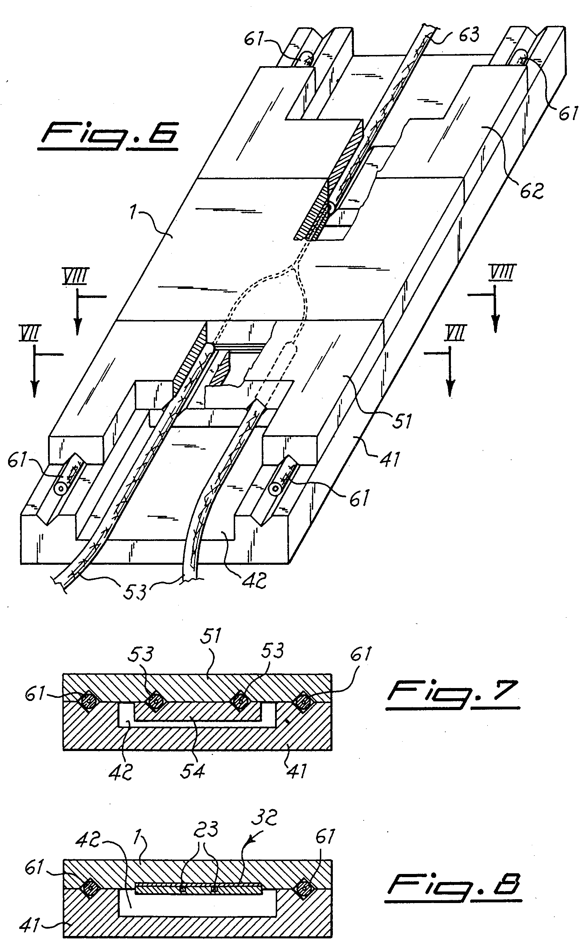

Figure 3 shows a perspective view of a preferred embodiment of the substrate 1 of figure 2 which presents in its upper side the waveguides 23 previously illustrated with reference to figure 2. On the substrate in semiconductor material 21 (see also figure 2) at least one longitudinal groove 31 is realized making it possible to align in an automatic way all degrees of freedom of the coupling system as it will turn out more evident with reference to figures 4 to 8.

In particular according to a preferred embodiment of the invention, a first longitudinal groove 31 is foreseen on the left side of the projecting portion 32 of substrate 1 (which comprises the waveguides 23 as well as the lower cladding 22 and the upper cladding 24) as well as a second longitudinal groove 31 on the right side of said projecting portion 32. The distance which lies between the two grooves is equal to H.

The invention foresees moreover the presence of a support element 41, illustrated in details in figure 4, which comprises a longitudinal recess 42 suitable to receive the projecting portion 32 of substrate 1.

This support element 41 foresees, on the right and left side of the longitudinal recess 42 the presence of a first and a second longitudinal groove labelled in figure 4 by the reference 43 put between them always ad a distance H. The length of the support element 41 is sensibly greater than the length of the first substrate 1 previously illustrated with reference to figure 3.

Moreover the invention provides for the presence of a second substrate illustrated in details in figure 5 and there marked by the reference 51. This second substrate comprises two longitudinal grooves 52 suitable to receive the same number of optical fibre lengths 53 which are suitable to be coupled with the waveguides 23 in order to allow the passage of optical signals from the waveguides 23 to the optical fibres 53 or vice versa.
The optical fibres 53 are constrained inside of the longitudinal grooves 52 by means of a covering element 54. Said substrate 51 foresees moreover the presence of two other longitudinal grooves 55 provided for on the right and left side of the optical fibres 53. Even in this case the distance which lies between the longitudinal grooves 55 is equal to H.

Figure 6 shows a perspective view of the system according to the invention.

In particular it shows the support element 41 in which longitudinal grooves 43 optical fibre positioning lengths turn out to be positioned. According to an alternative embodiment of the invention, the optical fibre lengths 61 are replaced by a longitudinal body of preferably cylindrical section and realized with a precision inferior to the µm.

The first substrate 1 is turned upside-down in a way that the longitudinal grooves 31 turn out to be set against to the longitudinal grooves 43 and therefore the optical fibre lengths turn out to be positioned inside of each pair of opposed grooves binding the substrate 1 to get a well precise position within the support element.

Figure 8 shows a cross section of the support element 41 and of the first support element 1 realized according to plane VIII-VIII of figure 6 in order to put into evidence the fact that the projecting portion 32 of substrate 1 turns out to be positioned inside the longitudinal recess 42 of the support element 41.

Always on this support element is put the second substrate 51 in such a way that the optical fibre positioning lengths 61 are positioned inside the longitudinal grooves 55.

When these conditions are achieved, the front sides of the optical fibre lengths 53 turn out to be opposed to the front sides of the waveguides 23. In particular the second substrate 51 may be easily moved longitudinally thanks to the presence of the optical fibre positioning lengths 61 which in this way set up a sort of binaries allowing to align in an almost automatic way all degrees of freedom of the coupling system.

In fact if for example the axis of one of the waveguides 23 is at a distance of a predetermined entity D from the summit of the longitudinal grooves, if the arrangement is that the axis of the corresponding fibre lengths 52 is at a distance of the same entity D from the summit of the longitudinal groove 55, it turns out to be evident that when the longitudinal grooves 55 lean on the optical fibre lengths 61, the optical waveguides 23 and the optical fibre lengths 53 turn automatically out to be aligned.

In particular such self-alignment is automatically carried out if in addition to the above-mentioned device set up by at least one optical fibre length 61 determining an automatic alignment on the horizontal axis, a second device is adopted which is useful for the determination of an automatic alignment also on the vertical axis.

This last alignment may be achieved providing the presence of a slight groove on substrate 1 in a way that the axis of the waveguides 23 lies on the same level of the axis of said optical fibre positioning lengths 61, or eliminating this slight groove and differentiating the depth of the longitudinal grooves 43, 55 and 31 as well as calibrating the thickness of the lower cladding 22 of substrate 1 in a way that the vertical position of the optical axis of the waveguides 23 and of the optical fibre lengths will be practically coinciding.

Figure 7 shows the section of the base element 41 and of the second substrate 51 carried out according to plane VII-VII of figure 7 in order to illustrate the positioning of the covering element 54 inside the longitudinal recess 42.

Without departing from the spirit of the invention, it turns out to be possible to put between the first substrate 1 and the second or third substrate 51 or 62, respectively, further substrates on which waveguides are deposited in order to implement for example two further optical splitters in order to distribute the optical signal entering the optical fibre length 63 on four outgoing optical fibre lengths 53.

Although the invention has been described with reference to a preferred embodiment it will be understood by those skilled in the art that various other modifications and variations may be made without departing from the spirit and the protection of the present invention.

One of such variations consists for example in the elimination of one of the two optical fibre positioning lengths 61 using in this way for such function only one of those two lengths and/or eliminating the support element 41 and binding in whatever way the first substrate 1 to the second and/or the third substrate 51 and 62 by means of at least one optical guide positioning length 61 positioned inside of at least one longitudinal groove.

In other words the solution idea at the basis of the present invention is inherent in the use of at least one optical fibre length to determine the automatic positioning of the substrate supporting the optical fibres compared to the substrate supporting the waveguides.

For those skilled in the art it is easy to identify a multitude of embodiments of the above-mentioned solution without departing from the spirit and the protection of the following claims.

One of these alternative embodiments foresees the use of a covering element which are at least partially superimposed to the substrate supporting the waveguides as well as to the substrate supporting the optical fibres and which foresees the presence of a longitudinal groove suitable to receive said at least one optical fibre length (for the automatic positioning of the above-mentioned elements) which is also positioned inside a longitudinal groove foreseen in the first and/or second substrate.

## Claims

1. Self-aligning coupling system between optical fibres and waveguides of the type including:
- a first substrate (1) on which surface at least one waveguide (23) is realized;
- at least a second substrate (51) which supports at least one optical fibre length (53) for the transmission of optical signals which turns out to be constrained against said substrate (51) by means of a covering element (54),
characterized in that at least one of the above-said substrates (1 or 51) includes a longitudinal groove (31 or 55) suitable to receive a longitudinal positioning body (61), said longitudinal groove being put at a predetermined distance (D) with reference to the axis of said at least one waveguide (23), and/or with reference to the axis of said at least one optical fibre length (53).

2. System according to claim 1, characterized in that it includes also a support element (41) heaving also this one at least one longitudinal groove (43) suitable to receive said longitudinal positioning body (61) and also heaving a longitudinal recess (42) suitable to receive:
- the projecting portion (32) of the first substrate englobing said at least one waveguide (23);
- said covering element (54),
when the first and the second substrate (1, 51) are positioned on the support element (41) in such a way that the front side of the at least one waveguide (23) turns out to be opposed to the front side of the at least one optical fibre length (53).

3. System according to claims 1 or 2, characterized in that said longitudinal positioning body is set up by an optical fibre positioning length (61).

4. System according to the previous claims, characterized in that said support element (41) and said first and second substrate (1, 51) include two longitudinal grooves suitable to receive the same number of optical fibre positioning lengths.

5. System according to claim 1, characterized in that said at least one optical fibre length (53) for the transmission of optical signals is allocated inside of a seat set up by two opposed longitudinal grooves (52) obtained on said second substrate (51) and on said covering element (54) and by the fact that the front sides of said second substrate (51) Of said covering element (54) and of said at least one optical fibre length (53) for the transmission of optical signals are coplanar.

6. System according to claim 1, characterized in that:
- said second substrate (51) is set up by a plane surface;
- said at least one optical fibre length (53) for the transmission of optical signals and said longitudinal positioning body (61) are placed inside of the same number of longitudinal grooves provided in said covering element (54);
- the covering element (54) superimposes at least partially also the first substrate (1).

7. System according to the previous claims, characterized in that it includes a third substrate (62) which supports at least one optical fibre length (63) for the transmission of optical signals which turns out to be constrained against said third substrate (62) by means of a covering element.

8. System according to claim 7, characterized in that said third substrate includes also the presence of at least one longitudinal groove suitable to receive said longitudinal positioning body (61).

9. System according to claims 7 and 8, characterized in that said third substrate (62) is coupled with the waveguides foreseen on said first substrate (1) in opposed position compared to that occupied by said second substrate (51).

10. System according to the previous claims, characterized in that between the first and the second and/or the third substrate (1, 51 and/or 62) at least one further substrate is put which englobes waveguides.

11. System according to the previous claims, characterized in that said first substrate foresees the presence of a slight groove and the thickness of the lower cladding (22) of the waveguides (23) is sized in such a way that the axis of said at least one waveguide (23) coincides with the axis of said at least one optical fibre length (63).

12. System according to claims 1 to 9, characterized in that the depth of the longitudinal grooves foreseen on said support element (41) is differentiated compared to the depth of the longitudinal grooves (31, 53) foreseen on said substrates (1, 51, 62).
